# EUROPEAN PATENT SPECIFICATION

(11) **EP 2 700 054 B1**
(45) Date of publication and mention of the grant of the patent: **22.04.2015**
(21) Application number: 12728328.1
(22) Date of filing: 12.06.2012
(51) Int. Cl.: G06T 7/20, G06K 9/00, G08G 1/065, G08G 1/04

(54) **SYSTEM AND METHOD FOR VIDEO-BASED VEHICLE DETECTION**
VORRICHTUNG UND VERFAHREN ZUR VIDEOBASIERTEN FAHRZEUGERKENNUNG
PROCÉDÉ ET PROCESSUS POUR LA DÉTECTION DE VEHICULES BASÉ SUR VIDÉO

(43) Date of publication of application: 26.02.2014
(73) Proprietor: Institute of Electronics and Computer Science, 1006 Riga (LV)
(72) Inventor: FREIVALDS, Karlis, 1006 Riga (LV); KADIKIS, Roberts, 1006 Riga (LV); GREITANS, Modris, 1006 Riga (LV)
(86) International application number: PCT/LV2012/000009
(87) International publication number: WO 2013/187748

(56) References cited:
- WO-A1-2008/083663
- US-B1- 6 766 038
- ZHIGANG XU ET AL: "Novel vehicle detection system based on line scan camera", 9TH INTERNATIONAL CONFERENCE ON ELECTRONIC MEASUREMENT & INSTRUMENTS, 2009 : ICEMI '09 ; 16 - 19 AUG. 2009, BEIJING, CHINA ; PROCEEDINGS, IEEE, PISCATAWAY, NJ, USA, 16 August 2009 (2009-08-16), pages 1-748, XP031537710, ISBN: 978-1-4244-3863-1
- FATHY M ET AL: "A WINDOW-BASED IMAGE PROCESSING TECHNIQUE FOR QUANTITATIVE AND QUALITATIVE ANALYSIS OF ROAD TRAFFIC PARAMETERS", IEEE TRANSACTIONS ON VEHICULAR TECHNOLOGY, IEEE SERVICE CENTER, PISCATAWAY, NJ, US, vol. 47, no. 4, November 1998 (1998-11), pages 1342-1349, XP000875439, ISSN: 0018-9545, DOI: 10.1109/25.728525
- Muhammad Imram: "Analysis of Vision systems and Taxonomy Formulation: An abstract model for generalization", Research report in electronics, 2011, pages 1-47, XP055055133, Sundsvall, SE ISBN: 978-9-18-669479-1 Retrieved from the Internet: URL:http://urn.kb.se/resolve?urn=urn:nbn:s e:miun:diva-15977 [retrieved on 2013-03-04]

## Description

### Technical field

This invention relates to a system and method for video-based vehicle detection.

### Background art

There is known US patent application No. US2008/0181457 describing video based monitoring system and method. The system comprises an image acquisition module, a movement detection module, and a stationary object detection module. The movement detection module is adapted for detecting the presence of a moving object in a region of interest of said captured video image. The stationary object detection module is adapted for detecting the presence of a stationary object in said region of interest and operable when said movement detection module fails to detect a moving object in a region of interest of a current frame of the captured image. The stationary object detection module includes a pixel-by-pixel comparison module adapted to determine the number of pixels in the region of interest in the current frame whose pixel values match with that of corresponding pixels in an immediately preceding frame.

Video-based vehicle detection and tracking system and method is decribed in US patent application No. US2011/170744. The systems and method analyze video data, for example, to count objects, determine object speeds, and track the path of objects without relying on the detection and identification of background data within the captured video data. The detection system uses one or more vertical scan lines to generate a spatiotemporal map.

Method (Z. Xu et al, Proc. ICEMI, pages 748-751, 2009) uses the single-line camera for the higher scan rate and the minimal background change. Moreover, the acquired line images are concatenated to a 2D image. 2D images are then used for vehicle speed estimation and counting.

(M. Fathy et al, Transactions on Vehiclular Technology, Vol. 47, No 4, pages 1342-1349, 1998) describes a system for monitoring the speed of vehicles and for counting vehicles by performing edge detection within two predetermined sub-areas (referred to as windows) of a traffic video image sequence.

Patent US6766038B1 describes a speed measurement system for road vehicles using two line scan cameras, wherein the speed of vehicle is determined by recognizing and matching image frames.

Above described video based vehicle detection systems does not provide measures to control an intensive traffic flow and can not provided effective detection of vehicles that change its lanes in a region of interest or region of detection.

The aim of the invention is to design a video based system and method for vehicle detection that effectively detects every vehicle in intensive traffic flow and vehicles that change its lane in a region of interest. Additionally, System should consume less computing power than existing systems keeping the same degree of performance.

The proposed system and method has the benefit of transport detection, independent of the traffic flow direction (the method detects vehicles running simultaneously in opposite directions), number of lanes or existence of lanes. The method detects vehicles in chaotic traffic conditions, for example, due to an accident or other circumstances.

### Summary of the invention

Said aim is achieved by design of a video based vehicle detection system comprising an image acquisition module for capturing a video image containing a region of interest, a line isolation module for acquiring at least one scan line, especially one horizontal scan line, a motion detection module for detecting a movement on the scan line, an object detection module for detecting a presence of an vehicle in the region of interest using the scan line, a interval processing module for creating and processing intervals on a scan line and a vehicle counting module for counting vehicles in the region of interest by processing information received from the interval processing module. Optionally the video based vehicle detection system comprises a shudder detection module for camera shudder detection.

The motion detection module of the system further comprises a first adaptive threshold acquisition module for acquiring threshold values for motion detection.

The object detection module of the system further comprises a second adaptive threshold acquisition module for acquiring threshold values for object detection.

The scan line comprises at least one horizontal line of pixels. The scan line comprises one initial detection line with three adjacent lines on each side, wherein all seven lines generate one combined line.

Said system is controlled by a method, wherein said method including the following steps: a) capturing of an image in a region of interest by means of an image acquisition module; b) isolating a scan line provided in the region of interest by means of a line isolation module; c) motion detection on the scan line by means of a motion detection module; d) object, such as vehicle detection on the scan line by means of an object detection module, wherein step c) and d) are performed simultaneously; and e) counting of object, such as vehicles, in the region of interest by means of a vehicle counting module.

The step c) of the method further includes thresholding of the scan line with at least one, preferably two, thresholds and creation of an interval on the scan line where vehicle appears.

The step d) of the method further includes acquisition of line parameters such as colour, intensity and edges; updating of backgrounds for said line parameters, and subtraction of background.

The step e) of the method further includes closing of the interval on the scan line if there is no more changes comparing to the background information and no motion has been detected in area of interval for specified number of frames. If closed interval meets predetermined vehicle parameters, closure of the interval counts as one vehicle.

System can detect such a vehicles as bikes, moto-rollers, moto-bikes, cars, lorries and other types of motor vehicles.

Conducted experiments showed that the above mentioned system and method is fast and efficient, because most of the processing operations are carried out on a single horizontal scan line of a frame. Both moving and stationary vehicles are detected on this scan line by combining methods of movement detection (inter-frame difference) and object detection (current intensity or color, or edge frame difference with background reference).

### Brief description of drawings

Fig. 1 is a block diagram illustrating main modules of a system.
Fig. 2 is a flowchart illustrating a method for video based vehicle detection.
Fig. 3 is a display page showing one frame of captured video data. The frame includes a scan line **11**. A vehicle **13** is shown entering the scan line **11** and an interval **12** on said scan line **11**.
Fig. **4** illustrates a combined scan line **11** acquired by combination of several adjacent scan lines.

### Detailed description of the invention

Next, with reference to drawings, the present invention will be described in detail.

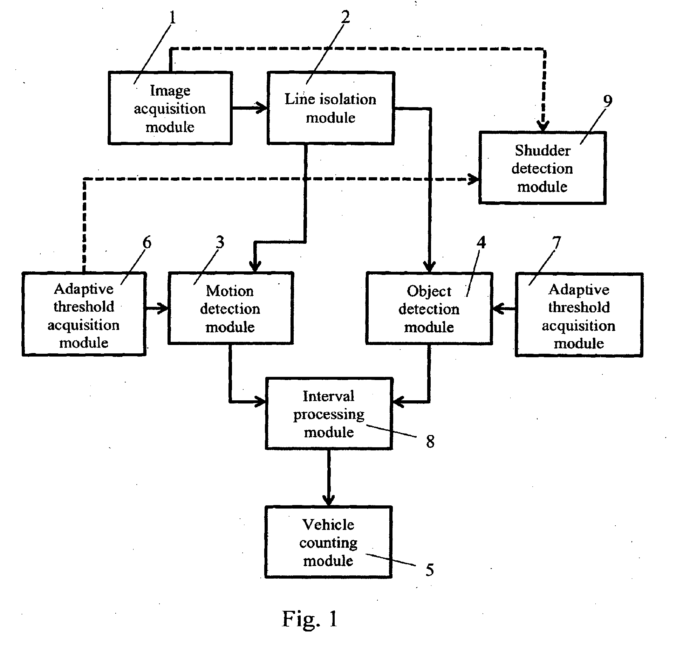

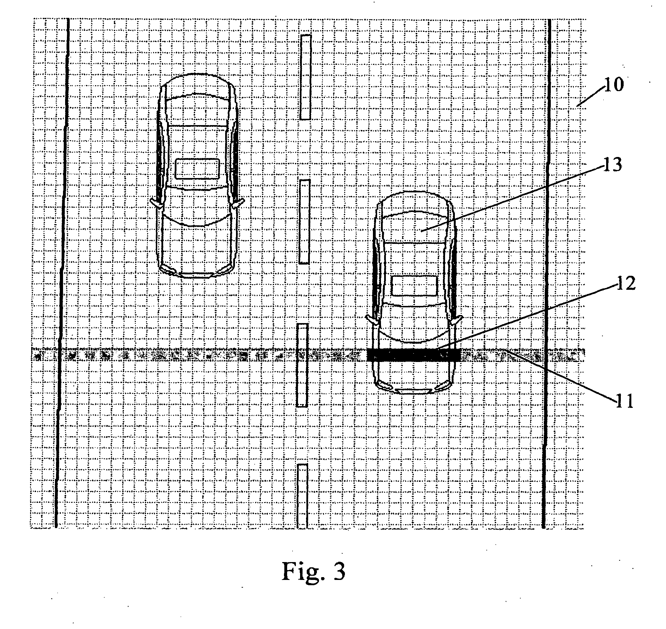

In Fig. 1 is shown a block diagram of the system for video based object detection. Said system comprises an image acquisition module **1** for capturing a video image containing a region of interest **10** (see Fig. 3). Said image acquisition module **1** includes image-capturing device such as video camera for capturing image. Said image acquisition module **1** further comprises a line isolation module **2** for acquiring at least one scan line **11**, especially one horizontal scan line **11**, on the region of interest **10.** The line isolation module **2** is operatively connected to the image acquisition module **1**. The image acquisition module **1** also comprises a motion detection module **3** and an object detection module **4**. The motion detection module **3** is adapted to detect a movement on the scan line **11**. The object detection module **4** is adapted to detect a presence of a vehicle **13** in the region of interest **10** using the scan line **11**. The motion detection module **3** and the object detection module **4** are both operatively connected to the line isolation module **2** from which both modules **3** and **4** receives image to be processed. The image includes the region of interest **10** and generated scan line **11**.

The motion detection module **3** further comprises a first adaptive threshold acquisition module **6** for acquiring threshold values for motion detection. The object detection module **4** further comprises a second adaptive threshold acquisition module **7** for acquiring threshold values for object detection. Both adaptive threshold acquisition modules **6** and **7** improve reliability of the system when it operates in variable lightning and weather conditions.

Motion detection is achieved by first saving intensity values of pixels of the scan line **11**. Saved intensity values from previous frame are subtracted from current values on the scan line **11**. Absolute values of difference are obtained. A median filter is applied to absolute difference of the scan lines **11** to reduce noise variance. Then threshold is applied to segment line pixels in to moving objects, such as vehicles **13** and static background or region of interest **10.** Pixels with values greater than threshold are considered as pixels of moving objects or vehicles **13**.

Automatically detected threshold is used to segment the scan line **11** of inter-frame difference. If that leads to existence of intervals **12** that are long enough to represent a vehicle **13** then second threshold is used in broadened area of this interval **12**. Second threshold is smaller than first by initially defined value, thus if first threshold cut some parts of vehicle **13** near the edges of found interval **12**, it is possible that second threshold will segment those parts as objects **13** and it will broaden the interval **12**. Second threshold is also used, if two small intervals **12** have characteristics that conform to the headlights of vehicle **13**. If two small intervals **12** correspond in width to defined possible sizes of headlights, they are similar in length and they are not too far apart, second threshold is used between them to increase possibility of finding moving objects or vehicles **13** between intervals **12**.

To automatically obtain adaptive threshold value, intensity values of the scan lines **11** from those frames where vehicles **13** were detected are accumulated. Accumulated scan lines **11** are combined in to single image that is updated when new scan line **11** is accumulated. Threshold from this image is found by using Otsu's method.

Modified (optional) version of threshold acquisition uses Otsu's method, when new scan line **11, 11A, 11B** is added to image for threshold calculation. When no new scan **11, 11A, 11B** line is added, threshold value is changed by adding or subtracting each frame, based on several conditions. If more pixels on a scan line **11, 11A, 11B** which are outside all found intervals overcomes the threshold than pixels inside intervals **12**, or if more than some defined part (relation 1/16 is used) of outside pixels overcomes the threshold, threshold is increased. Whereas, if less than half of interval pixels overcome threshold while at least 1/16 of outside pixels does, threshold is reduced.

System further comprises an interval processing module is used for processing of intervals using input data from the motion detection module and the object detection module. The interval processing module is configured to include the following steps: creation of intervals; conjugation of intervals; narrowing of intervals; and closure of intervals.

The system further comprises a vehicle counting module **5** for counting vehicles **13** in the region of interest **10** by processing information received from the interval processing module **8**.

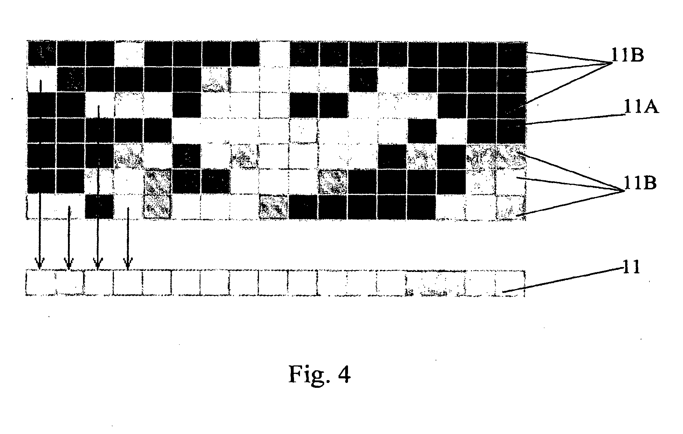

As seen in Fig. 3 said scan line **11** comprises at least one horizontal line of pixels. The scan line **11** can be upgraded to several more scan lines **11A** and **11B** as shown in Fig. 4. Depending on frame rate of camera used, position of camera and speed of vehicle 13, objects can move by different number of pixels in consecutive frames. Small frame rate of camera leads to situations when vehicles **13** in consecutive frames move significantly in direction that is perpendicular to the scan line **11**. Therefore line that is only one pixel high may skip some important features of vehicles **13**, since those parts of vehicles never arrive on to detector. For this reason, proposed system can use more than one line **11** for movement and object detection. Different number of the scan lines **11A** and **11B** adjacent to scan line **11** can be used, depending on camera frame rate. Each of these scan lines **11A** and **11B** are saved and subtracted from corresponding scan lines **11A** and **11B** in next frame. After subtraction, absolute values of resultant pixels are obtained. Then results of few scan lines **11A** and **11B** are combined in to a single scan line **11** as shown in Fig. 3.

In one embodiment the scan line **11** can comprise one initial detection line 11 A with three adjacent lines **11B** on each side, wherein all seven lines **11A** and **11B** generate one combined line **11**.

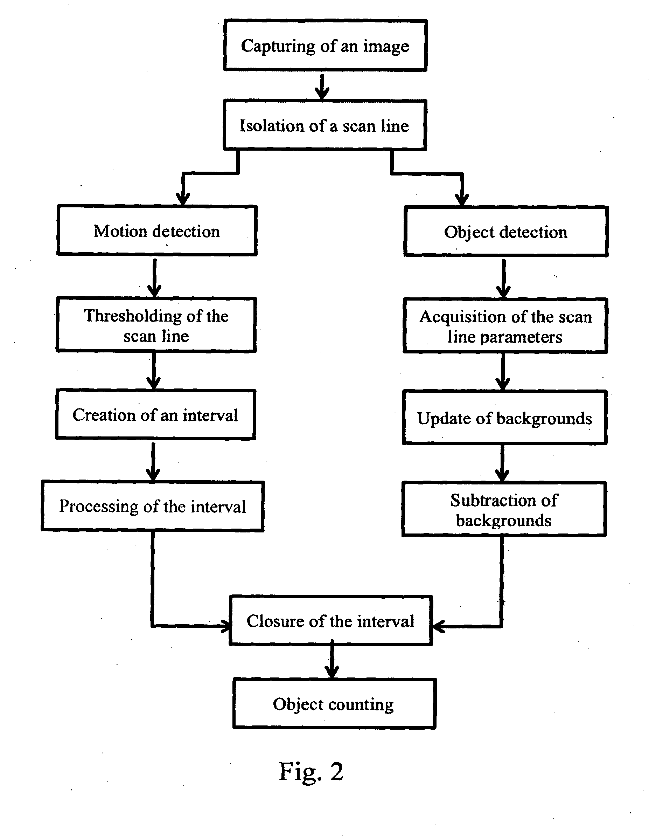

Said invention includes a method for detecting a vehicle by means of a video-based vehicle detection system. Fig. 2 shows a flowchart illustrating steps of a method for video based vehicle detection. Said method includes a step a) performing a capturing of an image or a frame in a region of interest **10** by means of an image acquisition module 1.

The next step b) performs isolation of a scan line **11** provided in the region of interest **10** by means of a line isolation module **2**. Step b) is followed by step c) performing motion detection on the scan line **11** by means of a motion detection module **3**. The step c) further includes thresholding of the scan line **11** with at least one, preferably two, thresholds and creation of an interval **12** on the scan line where vehicle **13** is detected.

Method includes shudder detection step. Said step uses frames acquired by the image acquisition module **1**. From input picture specified pixels are isolated. Those pixels are distributed evenly across whole image and those pixels may correspond to vehicles, road or regions outside the road. Pixels are converted to grayscale and intensities of pixels are saved for comparison to intensities in the next frame. Absolute value of inter-frame difference for every isolated pixel is obtained. This value is thresholded using adaptive threshold for movement detection acquired in the adaptive threshold acquisition module **7** (same threshold as in motion detection). Pixels with intensities greater than threshold are counted. If relation between counted pixels to number of all isolated pixels is greater than specified number, shudder of camera or fast change in lightning conditions is detected.

Simultaneously with the step c) a step d) is performed. The step d) includes object, such as vehicle **13**, detection on the scan line **11** by means of an object detection module **4**.

The step d) further includes acquisition of line parameters such as colour, intensity and edges; updating of backgrounds for said line parameters, and subtraction of background. Absolute values of differences between scan lines **11** and corresponding lines of background or region of interest **10** are obtained. These difference lines are then thresholded. Different threshold value is obtained for each parameter. Pixels with intensity values greater than threshold are considered as pixels that correspond to objects. Object detection step also uses information from shudder detection step. When shudder is detected, current backgrounds are completely replaced at next moment, when no interval exists on a scan line **11**.

When motion detection module **3** has detected motion, interval **12** is created on a scan line **11** in the region of detected motion and saved in a buffer of intervals **12**. All new intervals **12** are compared to already existing intervals **12**. If some intervals **12** overlap, they are combined in to single interval **12.** Step further includes narrowing of existing intervals **12**, if the motion detection module **3** indicates, that the interval **12** is wider than detected object (vehicle) **13**. Interval **12** can be shortened only by a specific number of pixels in consecutive frames, so that significant errors in the motion detection module **3** or stopping of vehicle **13** does not affect width of interval **12**. Step further includes closure of intervals **12**. If no motion is detected in area of existing interval **12** for specified number of frames and if there is no more changes comparing to the background information, interval **12** is closed.

Finally, a step f) is executed wherein counting of objects, such as vehicles **13**, is performed in the region of interest **10** by means of a vehicle counting module **5**. The step e) further includes closing of the interval **12** on the scan line **11** if there is no more changes comparing to the background information and if it meets predetermined vehicle parameters, wherein every closure of the interval **12** counts as one vehicle **13**. Parameters of all closed intervals **12** are examined and if they meet predetermined vehicle **13** parameters, closure of interval **12** counts as one vehicle **13**.

It should be understood by those skilled in the art that the structure and details of the present invention may be changed in various manners without departing from the scope of the appended claims.

## Claims

1. A video based vehicle detection system comprising:
- an image acquisition module (1) for capturing a video image containing a region of interest (10);
- a line isolation module (2) for acquiring at least one scan line (11), especially one horizontal scan line (11) in the region of interest (10);
- an object detection module (4) for detecting a presence of a vehicle (13) in the region of interest (10) by subtraction of backgrounds;
**characterized by** :
- a motion detection module (3), for detecting a movement on the scan line (11) by thresholding said scan lirie (11) and creation of an interval (12) if changes from the threshold are detected;
- an interval processing module (8) for processing previously created intervals (12) on the scan line (11) for creation of interval (12) on the scan line (11) where changes from threshold are detected, conjugation of said interval (12), narrowing of the interval (12) and closure of said interval (12); and
- a vehicle counting module (5) for counting vehicles (13) in the region of interest (10) by processing information received from the interval processing module (8).

2. The system according to Claim 1, wherein the motion detection module (3) further comprises a first adaptive threshold acquisition module (6) for acquiring threshold values for motion detection.

3. The system according to Claim 1, wherein the object detection module (4) further comprises a second adaptive threshold acquisition module (7) for acquiring threshold values for object detection.

4. The system according to Claim 1, wherein the scan line (11) comprises at least one horizontal line of pixels.

5. The system according to Claim 1, wherein the scan line (11) comprises one initial detection line (11A) with three adjacent lines (11B) on each side, wherein all seven lines (11A, 11B) generate one combined line (11).

6. The system according to Claim 1, wherein the system further comprises a shudder detection module (9) for detecting a shudder of camera used for image acquisition.

7. Method for detecting a vehicle by means of a video-based vehicle detection system according to any of the preceding claims, wherein said method including the following steps:
a) capturing a video image containing a region of interest (10) by means of an image acquisition module (1);
b) acquiring at least one scan line (11), especially one horizontal scan line (11) in the region of interest (10) by means of a line isolation module (2);
c) detecting a presence of a vehicle (13) in the region of interest (10) by subtraction of backgrounds by means of an object detection module (4);
**characterized by**:
d) detecting a movement on the scan line (11) by thresholding said scan line (11) by means of a motion detection module (3) and creation of an interval (1) on the scan line (11) if changes from the threshold are detected;
e) processing of previously created intervals (12) on the scan line (11) for creation of interval (12) on the scan line (11) where changes from threshold are detected, conjugation of said interval (12), narrowing of the interval (12) and closure of said interval (12) by means of an interval processing module (8);
f) counting vehicles (13) in the region of interest (10) by means of a vehicle counting module (5) by processing information received from the interval processing module (8).

8. The method according to Claim 7, wherein steps c) and d) are performed simultaneously.

9. The method according to Claim 7, wherein the step c) further includes thresholding of the scan line (11) with at least one, preferably two, thresholds and creation of an interval (12) on the scan line where vehicle (13) is detected.

10. The method according to Claim 7, wherein the step d) further includes acquisition of line parameters such as colour, intensity and edges; updating of backgrounds for said line parameters, and subtraction of background.

11. The method according to Claim 7, wherein the step e) further includes creation of interval (12) on the scan line (11), where changes from threshold are detected, conjugation of said interval (12), narrowing of the interval (12) if the motion detection module (3) detects that the interval (12) is wider or shorter than detected vehicle (13), and closure of said interval (12).

12. The method according to Claims 7 or 11, wherein the step e) further includes closing of the interval (12) on the scan line (11) if there is no more changes comparing to the background information and it meets predetermined vehicle parameters, wherein in step f) every closure of the interval (12) counts as one vehicle (13).

13. The method according to Claim 7, wherein said method further includes the step of shudder detection by means of a shudder detection module (9) improving reliability of said system.

## Patentansprüche

1. Ein videobasiertes Fahrzeugerkennungssystem bestehend aus:
- einem Bilderfassungsmodul (1) zum Aufnehmen eines Videobildes, das den interessierenden Bereich enthält (10);
- einem Linienisolationsmodul (2) zur Erfassung von mindestens einer Abtastlinie (11), insbesondere von einer horizontalen Abtastlinie (11) im interessierenden Bereich (10);
- einem Objekterfassungsmodul (4) zum Erfassen der Anwesenheit eines Fahrzeugs (13) im interessierenden Bereich (10) durch Subtraktion von Hintergründen; **gekennzeichnet durch**:
- ein Bewegungserfassungsmodul (3) zum Erfassen einer Bewegung auf der Abtastlinie (11) **durch** Erstellung eines Schwellenwertes der genannten Abtastlinie (11) und Schaffung eines Intervalls (12), wenn Abweichungen vom Schwellenwert erfasst werden;
- ein Intervallverarbeitungsmodul (8) für die Verarbeitung von vorher auf der Abtastlinie (11) erstellten Intervallen (12) zur Schaffung eines Intervalls (12) auf der Abtastlinie (11), wo Abweichungen vom Schwellenwert erfasst werden, Konjugation des genannten Intervalls (12), Verengung des Intervalls (12) und Schließung des genannten Intervalls (12); und
- ein Fahrzeugzählung-Modul (5) zum Zählen von Fahrzeugen (13) im interessierenden Bereich (10) **durch** die Verarbeitung von empfangenen Informationen aus dem Intervallverarbeitungsmodul (8).

2. Das System gemäß Patentanspruch 1, wobei das Bewegungserfassungsmodul (3) ferner aus ein erster adaptiver Schwellenerfassungsmodul (6) zum Erfassen von Schwellenwerten für die Bewegungserfassung besteht.

3. Das System gemäß Patentanspruch 1, wobei das Objekterfassungsmodul (4) ferner aus einem zweiten adaptiven Schwellenerfassungsmodul (7) zum Erfassen von Schwellenwerten für die Objekterfassung besteht.

4. Das System gemäß Patentanspruch 1, wobei die Abtastlinie (11) mindestens eine horizontale Linie von Pixeln enthält.

5. Das System gemäß Patentanspruch 1, wobei die Abtastlinie (11) eine anfängliche Erfassungslinie (11A) mit drei benachbarten Linien (11B) auf jeder Seite enthält, wobei alle sieben Linien (11A, 11 B) eine kombinierte Linie erzeugen (11).

6. Das System gemäß Patentanspruch 1, wobei das System ferner ein Schauder-Erfassungsmodul (9) zum Erfassen des Schauders des Kameraverschlusses zur Bildaufnahme enthält.

7. Verfahren zum Erfassen eines Fahrzeuges mittels eines videobasierten Fahrzeugerkennungssystems gemäß einem der vorhergehenden Patentansprüche, wobei das genannte Verfahren die folgenden Schritte umfasst:
a) Aufnahme eines Videobildes, das im interessierenden Bereich liegt (10) mittels eines Bilderfassungsmoduls (1);
b) Erfassung von mindestens einer Abtastlinie (11), insbesondere von einer horizontalen Abtastlinie (11), die im interessierenden Bereich liegt (10) mit mittels eines Linienisolationsmoduls (2);
c) Erkennung der Anwesenheit eines Fahrzeugs (13) im interessierenden Bereich (10) durch Subtraktion von Hintergründen mittels eines Objekterfassungsmoduls (4); **gekennzeichnet durch**:
d) Erfassung einer Bewegung auf einer Abtastlinie (11) **durch** Erstellung eines Schwellenwertes der genannten Abtastlinie (11) mittels eines Bewegungserfassungsmoduls (3) und **durch** Schaffung eines Intervalls (1) auf der Abtastlinie (11), wenn Abweichungen vom Schwellenwert erfasst werden;
e) Verarbeitung von vorher auf der Abtastlinie (11) erstellten Intervallen (12) zur Schaffung eines Intervalls (12) auf der Abtastlinie (11), wo Abweichungen vom Schwellenwert erfasst werden, Konjugation des genannten Intervalls (12), Verengung des Intervalls (12) und Schließung des genannten Intervalls (12) mittels eines Intervallverarbeitungsmoduls (8);
f) Zählen von Fahrzeugen (13) im interessierenden Bereich (10) mittels eines Fahrzeugzählung-Moduls (5) **durch** die Verarbeitung von Informationen, die aus dem Intervallverarbeitungsmodul empfangen werden (8).

8. Das Verfahren gemäß Patentanspruch 7, wobei Schritte c) und d) gleichzeitig ausgeführt werden.

9. Das Verfahren gemäß Patentanspruch 7, wobei Schritt c) ferner Erstellung eines Schwellenwertes der Abtastlinie (11) mit mindestens einem, vorzugsweise zwei Schwellenwerten enthält und Schaffung eines Intervalls (12) auf der Abtastlinie, wo das Fahrzeug (13) erfasst wird.

10. Das Verfahren gemäß Patentanspruch 7, wobei Schritt d) ferner Erfassung von Linienparametern, wie Farbe, Intensität und Kanten enthält; Aktualisierung der Hintergründe für die genannten Linienparameter, und Subtraktion von Hintergründen.

11. Das Verfahren gemäß Patentanspruch 7, wobei Schritt e) ferner Schaffung eines Intervalls (12) auf der Abtastlinie (11) enthält, wenn Abweichungen vom Schwellenwert erfasst werden, Konjugation des genannten Intervalls (12), Verengung des Intervalls (12), wenn das Bewegungserfassungsmodul (3) erkennt, dass das Intervall (12) breiter oder kürzer als das erfasste Fahrzeug ist (13) und Schließung des genannten Intervalls (12).

12. Das Verfahren gemäß Patentanspruch 7 oder 11, wobei Schritt e) ferner Schließen des Intervalls (12) auf der Abtastlinie (11) enthält, wenn es keine weiteren Änderungen im Vergleich zu den Hintergrundinformationen vorliegen und die vorbestimmten Fahrzeugparameter erfüllt sind, wobei in Schritt f) jede Schließung des Intervalls (12) als ein einzelnes Fahrzeug gezählt wird (13).

13. Das Verfahren gemäß Patentanspruch 7, wobei das genannte Verfahren ferner eine Schauder-Erfassung mittels eines Schauder-Erfassungsmoduls (9) umfasst, das die Zuverlässigkeit des genannten Systems verbessert.

## Revendications

1. Un système de détection de véhicule basés sur l'emploi d'une vidéo, comprenant:
- un module d'acquisition d'image (1) pour capturer une image vidéo contenant une région d'intérêt (10);
- un module d'isolation de ligne (2) pour acquérir au moins une ligne de balayage (11), en particulier une ligne de balayage horizontal (11) dans la région d'intérêt (10);
- un module de détection d'objet (4) pour détecter la présence d'un véhicule (13) dans la région d'intérêt (10) par soustraction des arrière-plans;
**caractérisé par**:
- un module de détection de mouvement (3), pour détecter un mouvement sur la ligne de balayage (11), par seuillage de ladite ligne de balayage (11) et la création d'un intervalle (12) 15 si les changements de seuil sont détectés;
- un module de traitement d'intervalle (8), pour la transformation des intervalles créés précédemment (12) sur la ligne de balayage (11) où les changements de seuil sont détectés, la conjugaison dudit intervalle (12), le rétrécissement de l'intervalle (12) et la fermeture dudit intervalle (12);
et
- un module de comptage de véhicule (5), pour compter les véhicules (13) dans la région d'intérêt (10) par traitement des informations reçues du module de traitement d'intervalle (8).

2. Le système en accord avec le point 1 du brevet, dans lequel le module de détection de mouvement (3) comprend en outre un premier module d'acquisition d'adaptation de seuil (6) pour acquérir des valeurs de seuil pour la détection de mouvement.

3. Le système en accord avec le point 1 du brevet, dans lequel le module de détection d'objet (4) comprend en outre un second module d'acquisition d'adaptation de seuil (7) pour acquérir des valeurs de seuil pour la détection d'objet.

4. Le système en accord avec le point 1 du brevet, dans lequel la ligne de balayage (11) comprend au moins une ligne horizontale de pixels.

5. Le système en accord avec le point 1 du brevet, dans lequel la ligne de balayage (11) comprend une première ligne de détection (11A) avec trois lignes adjacentes (11B) de chaque côté, dans lequel toutes les sept lignes (11a, 11b) génèrent une ligne combinée (11).

6. Le système en accord avec le point 1 du brevet, dans lequel le système comprend en outre un module de détection de vibration (9) pour détecter une vibration de la caméra utilisée pour l'acquisition de l'image.

7. Le procédé de détection d'un véhicule au moyen d'un système de détection de véhicule basé sur la vidéo selon l'un des points de brevet précédents, dans lequel ledit procédé comprend les étapes suivantes:
a) la capture d'une image vidéo contenant une région d'intérêt (10) au moyen d'un module d'acquisition d'image (1);
b) acquérir au moins une ligne de balayage (11), en particulier une ligne de balayage horizontal (11) dans la région d'intérêt (10) au moyen d'un module d'isolement de ligne (2);
c) détecter la présence d'un véhicule (13) dans la région d'intérêt (10) par soustraction des arrière-plans au moyen d'un module de détection d'objet (4); **caractérisé par**:
d) la détection d'un mouvement sur une ligne de balayage (11) par le seuillage de ladite ligne de balayage (11) au moyen d'un module de détection de mouvement (3) et la création d'un intervalle (1) sur la ligne de balayage (11), si des changements du seuil sont détectés;
e) le traitement d'intervalles créés précédemment (12) sur la ligne de balayage (11) pour la création d'intervalle (12) sur la ligne de balayage (11) où les changements deseuil sont détectés, la conjugaison dudit intervalle (12), le rétrécissement de l'intervalle (12) et la fermeture dudit intervalle (12) au moyen d'un module de traitement d'intervalle (8);
f) le comptage de véhicules dans la région d'intérêt (10) au moyen d'un module de comptage de véhicules (5) par traitement de l'information reçue à partir du module de traitement d'intervalle (8).

8. Le procédé selon le point 7 du brevet, dans lequel les étapes c) et d) sont réalisées simultanément.

9. Le procédé selon le point 7 du brevet, dans lequel l'étape c) comprend en outre le seuillage de la ligne de balayage (11) avec au moins une, de préférence deux, les seuils et la création d'un intervalle (12) sur la ligne de balayage où un véhicule (13) est détecté.

10. Le procédé selon le point 7 du brevet, dans lequel l'étape d) inclut en outre l'acquisition de paramètres de ligne tels que la couleur, l'intensité et les bords; la mise à jour des arrière - plans pour lesdits paramètres de ligne, et la soustraction d'arrière-plan.

11. Le procédé selon le point 7 du brevet, dans lequel l'étape e) comprend en outre la création d'intervalle (12) sur la ligne de balayage (11), où les changements de seuil sont détectés, la conjugaison dudit intervalle (12), le rétrécissement de l'intervalle (12) si le module de détection de mouvement (3) détecte que l'intervalle (12) est plus large ou plus court que le véhicule détecté (13), et la fermeture dudit intervalle (12).

12. Le procédé selon le point 7 ou le point 11 du brevet, dans lequel l'étape e) comprend en outre la fermeture de l'intervalle (12) sur la ligne de balayage (11), s'il n'y a pas d'autre modification de comparaison de l'information d'arrière-plan et si cela répond aux paramètres prédéterminés du véhicule, dans lequel l'étape f) à chaque fermeture de l'intervalle (12) compte pour un véhicule (13).

13. Le procédé selon le point 7 du brevet, dans lequel ledit procédé comprend en outre l'étape de détection de vibration au moyen d'un module de vibration (9) en améliorant la fiabilité dudit système.
